# EUROPEAN PATENT APPLICATION

(11) **EP 4 674 324 A2**
(43) Date of publication of application: **07.01.2026**
(21) Application number: 25211000.2
(22) Date of filing: 01.12.2021
(51) Int. Cl.: A47F 3/04

(54) **REFRIGERATOR**

(30) Priority: 11.01.2021 KR 20210003647
(62) Divisional of application: 21211829.3
(71) Applicant: LG Electronics Inc., Yeongdeungpo-gu Seoul 07336 (KR)
(72) Inventor: DONGCHUL, Jin, 08592 Seoul (KR)
(74) Representative: Vossius & Partner Patentanwälte Rechtsanwälte mbB

(57) **Abstract**

A refrigerator comprises a cabinet comprising a storage chamber. A refrigerator further comprises a door configured to open and close the storage chamber, wherein the door comprises a panel assembly including a front panel made of glass and configured to provide a front surface of the door, a rear panel made of glass and spaced apart from the front panel and configured to define a rear surface of the door, and a rod disposed between the front panel and the rear panel and configured to provide a sealed space. The door further comprises side frames coupled to the rear surface of the front panel and configured to define side surfaces of the door. The door also comprises an upper frame coupled to the rear surface of the front panel and to the side frames and configured to define an upper surface of the door. The door further comprises a lower frame coupled to the rear surface of the front panel and to the side frames and configured to define a lower surface of the door. The door further comprises a door liner having a rectangular frame shape, the door liner being coupled to the upper frame, the lower frame, the side frames, and the rear panel. The door also comprises an insulator filled in a foaming space (S) defined by the panel assembly, the upper frame, the lower frame, and the side frames, wherein the door liner comprises a center portion penetrated in a thickness direction to expose the rear panel rearward. The door liner also comprises a foam boundary portion projected to cover the periphery of the center portion; and a damping plate arranged between the foam boundary portion and the rear panel.

## Description

### CROSS REFERENCE TO RELATED APPLICATION

The present application claims priority to Korean Patent Application No. 10-2021-0003647, filed January 11, 2021, the entire contents of which is incorporated herein for all purposes by this reference.

### TECHNICAL FIELD

The present disclosure relates to a refrigerator.

### BACKGROUND

Recently, a refrigerator configured to prevent loss of cool air in the refrigerator due to frequent opening of a door has been proposed. The refrigerator is configured to allow a user to see the inside of the refrigerator without opening the door of the refrigerator, thereby reducing the number of times of opening and closing the door of the refrigerator. In general, a refrigerator door consists of a panel assembly made of glass enabling the inside of the refrigerator to be seen, and a door frame supporting the panel assembly.

The door frame is made of only a metal material or is made of a synthetic resin, and the parts can be fixed to each other by screw fastening. Recently, in order to reduce the weight of the door to increase the convenience of using the door, the door frame of the door is made only of synthetic resin material, not metal material. The synthetic resin door frame is light in weight, but has weak strength compared to the metal door frame. Therefore, it is difficult to stably support the door panel made of heavy glass.

It is difficult to strongly fasten components of the synthetic resin door frame by a fastening device such as a bolt. Therefore, a foam solution may leak through the assembly part of the part.

In general, the refrigerator door is made by foaming and filling a foam solution such as polyurethane into the door for insulation performance. However, in the door for a refrigerator through which the inside of the refrigerator is visible, it is difficult to foam the foam solution because the foaming space and the foaming passage are relatively small compared to a general door for a refrigerator. Since it is necessary to avoid a glass portion through which the inside of the refrigerator is visible and form the foaming space in an outer part of the door, the foaming space and the foaming passage are limited to a part of the door except for the see-through part, i.e., the door frame.

It is possible to secure a sufficient foaming space by increasing the thickness of the door frame of the door, but the see-through part through which the inside of the refrigerator is visible is relatively reduced, or the door frame is exposed through a see-through window to spoil aesthetic of the door. For example, in Korean Patent Application Publication No. 10-2018-0078334, there is a disclosure of reducing foaming resistance in foaming a foam solution into a temporarily assembled door. In order to secure the foaming space and the foaming passage, the door frame is thick, and an area of the see-through window is relatively small.

### Documents of Related Art

(Patent Document 1) Korean Patent Application Publication No. 10-2018-0078334; and
(Patent Document 2) Korean Patent Application Publication No. 10-2017-0006542.

### SUMMARY OF THE INVENTION

Accordingly, the present disclosure has been made keeping in mind the above problems occurring in the related art, and the present disclosure is intended to provide a refrigerator, wherein a transparent panel assembly is applied as a door assembly to enable the inside of the refrigerator to bee seen through the door assembly and a door frame supporting the panel assembly consists of synthetic resin components engageably assembled to each other.

Another objective of the present disclosure is intended to provide a refrigerator, wherein a transparent panel assembly is applied to a door of the refrigerator to enlarge an area through which the inside of the refrigerator is visible, and an entire front surface of the panel assembly exposed forward consists only of a transparent front panel.

In order to achieve the above objectives, according to one aspect of the present disclosure, a refrigerator according to the present disclosure may include a cabinet having the storage chamber, and a door configured to open and close the storage chamber. The door may include a rod connecting a front panel to a rear panel that constitute a panel assembly. A heater housing may be attached to a rear surface of the front panel while covering the rod, and a heating device may be coupled to the heater housing and may be in contact with a rear surface of the front panel.

The heater housing may include a heater mounting groove being open toward the rear surface of the front panel, and the heating device may be mounted in the heater mounting groove.

The heater housing may include an attachment groove recessed on a location close to the heater mounting groove. The attachment groove may include a plurality of attachment grooves, which may be arranged in parallel along the heater housing.

The heater housing may have a L-shaped cross-section, and a portion of the heater housing may cover a lateral surface of the rear panel including the rod.

According to another embodiment of the present disclosure, a refrigerator may include a cabinet having a storage chamber, and a door configured to open and close the storage chamber. A door liner may be coupled at a rear portion of the door. The door liner may include a center portion penetrated in a thickness direction thereof to expose a rear panel constituting a panel assembly. The door liner may include a foam boundary portion projected to cover periphery of the center portion. A damping plate may be arranged between the foam boundary portion and the rear panel.

An outer portion of the door liner is in close contact with edges of a rear surface of a door frame having upper, lower, and side frames, and a first end of the foam boundary portion may be coupled to a rear surface of the rear panel.

A locking arm may be projected on an upper portion of the door liner to lock a lower end of an upper rear surface of the upper frame. A locking hook may be provided on a lower portion of the door liner, the locking hook being assembled while passing through a lower rear surface of the lower frame.

The foam boundary portion may be in close contact with a rear surface of the rear panel. A boundary of the foaming space is generated on a part in which the foam boundary portion and the rear surface of the rear panel are in close contact with each other.

The foam boundary portion may be recessed to provide a damping space therein. The damping plate may be projected from the damping space toward a surface of the rear panel, so that the damping space may be divided on the damping plate.

An edge of the door liner is in surface-contact with a rear surface of a door frame having upper, lower, and side frames. A division fence may be projected toward the foaming space on a surface of the door liner close to a rear surface edge of the door frame.

A gasket assembly groove into which a gasket is mounted may be recessed from the rear surface of the door liner. A plurality of air vents connected to the foaming space may be formed in the gasket assembly groove.

According to other embodiment of the present disclosure, a refrigerator may include a cabinet having a storage chamber, and a door configured to open and close the storage chamber. The door may have a door frame. The door frame may include an upper frame, a lower frame, and side frames. Side front surfaces of the side frames may be configured to be in surface-contact with a stepped assembly surface formed in at least one of an upper front surface of the upper frame and a lower front surface of the lower frame, thus the upper front surface or the lower front surface forms a surface same as the side front surfaces of the side frames.

The upper frame and the lower frame may respectively have stepped assembly surfaces on surfaces thereof, and when the side frames are coupled to the stepped assembly surfaces, surfaces of the side frames, the upper frame, and the lower frame may form a continuous surface.

The side frames and the upper frame may respectively have a locking hole and a first locking hook, so that the side frames and the upper frame may be engageably assembled to each other.

Wherein each of the side frames, the upper frame, and the lower frame may have a U-shaped cross-section, and the side frames and the upper frame may be perpendicularly assembled to each other and are in surface-contact with each other at three surfaces, and the side frames and the lower frame may be perpendicularly assembled to each other and be in surface-contact with each other at three surfaces.

Each of the side frames may include each of the side front surface being in surface-contact with the bezel part. The side front surface may be perpendicularly connected to side main portion. The side main portion may be perpendicularly connected to the side rear surface so that the side rear surface and the side front surface face each other.

A locking arm may be provided at the side front surface to lock a lower end of the upper frame. A locking hole into which the upper frame of a first locking hook is inserted may be formed in the side rear surface.

The upper frame may include an upper front surface being in surface-contact with the side front surface and the bezel part. An upper main part may be perpendicular connected to the upper front surface. An upper rear surface may be perpendicularly connected to the upper main part to face the upper front surface. The upper rear surface may be in surface-contact with the side rear surface.

The upper front surface and the upper rear surface may respectively have first locking hooks, and the first locking hooks may be formed to be inclined downward along an assembly direction between the upper frame and the side frames.

The upper frame may include a sensor mounting part to which the door sensor is mounted, and transfer ribs may be connected to a portion between the sensor mounting part and the upper front surface of the upper frame.

In the upper front surface, the upper main part, the upper rear surface, inner surfaces facing the foaming space may be connected to each other by a reinforcement rib.

An inlet may be formed in the upper main part constituting an upper surface of the upper frame, the inlet may include a pair of inlets spaced apart from each other in the upper main part, and any one of the pair of inlets may be arranged to overlap with the side frame, and a remaining inlet may be arranged at a location deviating from the side frame.

The lower frame may include the lower front surface being in surface-contact with the side front surface and the bezel part, and a lower main part may be perpendicularly connected to the lower front surface. The lower main part may be perpendicularly connected to a lower rear surface.

A locking arm may be provided at the side front surface to lock an upper end of the lower frame. A locking hole into which a second locking hook of the lower frame is inserted may be formed in the side rear surface.

The side front surface of the side frame and a rear surface of the front panel may form a first attachment surface, the upper front surface of the upper frame and the rear surface of the front panel may form a second attachment surface, and the lower front surface of the lower frame and the rear surface of the front panel may form a third attachment surface, and the first attachment surface, the second attachment surface, and the third attachment surface may form a continuous surface together.

A contraction prevention groove may be continuously formed on a surface of at least any one of the side frames, the upper frame, or the lower frame in a longitudinal direction.

According to the present disclosure as described above, the refrigerator has following effects.

The transparent panel assembly is applied to the door for a refrigerator, and the door frame supporting the panel assembly can consist of synthetic resin components that are engageably assembled to each other. Therefore, in comparison to the metal door frame, the total weight of the door is reduced, so that weight lightening of the door assembly can be realized.

According to the present disclosure, the frames (side frames, upper frame, and lower frame) constituting the door frame can be engageably assembled with each other without a fastening device such as a screw, and the door liner assembled in rear of the door frame can be also assembled to the door frame by the locking structure. Therefore, the assembly process of the door can be simplified and the assembling property can be improved.

Furthermore, according to the present disclosure, the panel assembly is supported only by the door frame without adding a separate outer frame other than the door frame, so that the supporting structure of the door can be thinned. An area (see-through part) through which the inside of the refrigerator is visible through the panel unit can be secured relatively wide. Therefore, even when the door is not opened, the user can see the storage space in the refrigerator and aesthetics of the door can be improved.

The front panel providing a fore-front surface in the multi-layered glass panel unit can be configured such that edges thereof are not surrounded by the door frame and an entire front surface thereof is exposed forward. Therefore, only a glass part (front panel) is exposed at the front of the door, and the aesthetic of the refrigerator can be improved.

When the frames (side frames, upper frame, and lower frame) constituting the door frame are assembled to each other, the front surface of the door frame can be formed in a continuous surface. Therefore, an adhesive force between the panel assembly attached to the front surface of the door frame and the front surface of the door frame can be improved, and the durability of the door can be improved. The wide attachment area can improve sealing performance of the foaming space can be improved.

In addition, the rear surface of the door frame is formed in a continuous surface so as to secure a wide contact area between the door liner and the door frame, so that sealing performance of the foaming space can be improved.

When the bezel part of the front panel is formed half-transparent, the bezel part can cover the assembly part such as the door frame arranged in rear of the front panel so as to improve the aesthetic of the door. The bezel part can transmit light emitted from a lighting device or a touchable operating device located at a rear surface of the bezel part, so that the bezel part can be used as a part of a display device.

When the side, upper, and lower frames constituting the door frame are made of synthetic resin material by injection molding, a relatively complicated shape of the door frame can be realized in comparison to when the side, upper, and lower frames are made of a metal material. Therefore, an installation structure for installing various electrical components such as a lighting device and a touch button can be implemented to the door frame.

The side, upper, and lower frames constituting the door frame can be engageably assembled in surface-contact with each other at various surfaces. Therefore, the more solid door frame can be configured and leakage of the foam solution between the components can be prevented.

### BRIEF DESCRIPTION OF THE DRAWINGS

The above and other objectives, features, and other advantages of the present disclosure will be more clearly understood from the subsequent detailed description when taken in conjunction with the accompanying drawings, in which:
FIG. 1 is a perspective view showing a configuration of a refrigerator to which a door for a refrigerator according to an embodiment of the present disclosure is applied.
FIG. 2 is a perspective view showing the door for a refrigerator according to the embodiment of the present disclosure.
FIG. 3 is a perspective view showing the door for a refrigerator according to the embodiment of the present disclosure at another angle from FIG. 2.
FIG. 4 is a perspective view showing disassembled parts constituting the door for a refrigerator according to the embodiment of the present disclosure.
FIG. 5 is a perspective view showing the disassembled parts constituting the door for a refrigerator according to the embodiment of the present disclosure at another angle from FIG. 4.
FIG. 6 is a perspective view showing a configuration of the door for a refrigerator according to the present disclosure without a panel unit.
FIG. 7 is a rear-perspective view showing a structure of a door frame constituting the door for a refrigerator according to the embodiment of the present disclosure.
FIG. 8 is a perspective view showing an inside structure of an upper frame constituting the door for a refrigerator according to the embodiment of the present disclosure.
FIG. 9 is a front view showing a front structure of the upper frame constituting the door for a refrigerator according to the embodiment of the present disclosure.
FIG. 10 is a sectional view taken along line I-I' in FIG. 2.
FIG. 11 is a perspective view showing a structure of side frames and a lower frame of the door frame constituting the door for a refrigerator according to the embodiment of the present disclosure.
FIG. 12 is a sectional view taken along line II-II' in FIG.2.
FIG. 13 is a sectional view taken along line III-III' in FIG. 2.
FIG. 14 is a perspective view showing a lower structure of the door for a refrigerator according to the embodiment of the present disclosure without the panel unit and the side frames.
FIG. 15 is a sectional view showing an upper lateral structure of the door for a refrigerator according to the embodiment of the present disclosure.
FIG. 16 is a sectional view taken along line IV-IV' in FIG.2.
FIG. 17 is a rear-perspective view showing the lower structure of the door for a refrigerator according to the embodiment of the present disclosure.
FIG. 18 is a sectional view showing the lower structure of the door for a refrigerator according to the embodiment of the present disclosure.
FIG. 19 is a sectional view taken along line V-V' in FIG. 2.
FIG. 20 is a view showing an example of manufacturing the door for a refrigerator according to the embodiment of the present disclosure.

### DETAILED DESCRIPTION OF THE INVENTION

Hereinbelow, some embodiments of the present disclosure will be described in detail with reference to accompanying drawings. Wherever possible, the same reference numerals will be used throughout the drawings and the description to refer to the same or like elements or parts. Further, it is to be noted that, when the functions of conventional elements and the detailed description of elements related with the present disclosure may make the gist of the present disclosure unclear, a detailed description of those elements will be omitted.

Further, when describing the components of the present disclosure, terms such as first, second, A, B, (a) or (b) may be used. Since these terms are provided merely for the purpose of distinguishing the components from each other, they do not limit the nature, sequence or order of the components. It will be understood that when an element is referred to as being "coupled" or "connected" to another element, it can be directly coupled or connected to the other element or intervening elements may be present therebetween.

A refrigerator according to an embodiment of the present disclosure will be described with reference to the accompanying drawings. For example, a built-in type refrigerator having a door assembly will be described for an example, but the door assembly of the present disclosure may be applied to various devices having an inside storage space, such as a general refrigerator, a wine refrigerator, a kimchi refrigerator, a beverage storage, a plant cultivation apparatus, and a laundry processing apparatus.

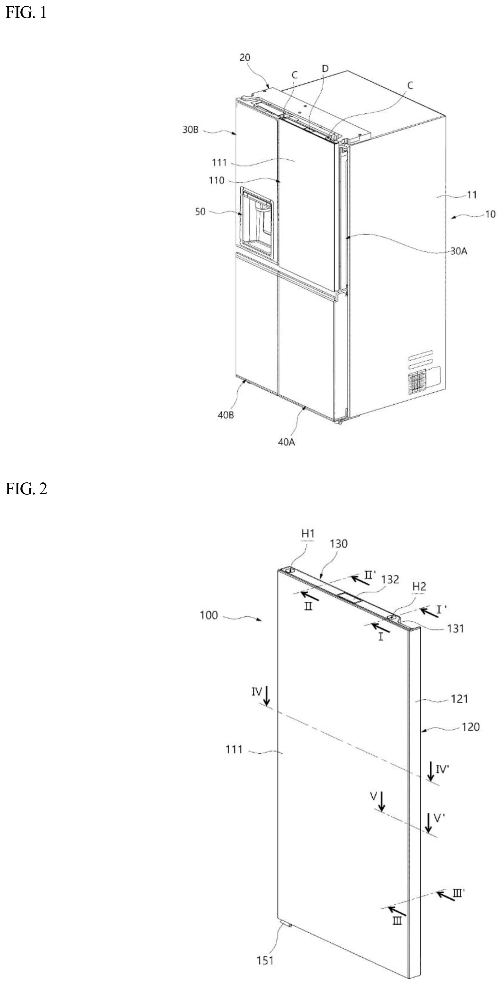

As shown in FIG. 1, a cabinet 10 provides the exterior of the refrigerator, and may have a shape of a six-sided object. The cabinet 10 is formed in a container that is open forward. The cabinet 10 consists of a plurality of parts, and may include an outer casing 11, as a major part, which provides an outside wall surface of the refrigerator. The opening of the cabinet 10 may be shielded by a door, which will be described later.

An upper portion of the cabinet 10 may have an upper plate 20. The upper plate 20 may be connected to the door provided at a front surface of the cabinet 10 to cover a hinge device (not shown) or constitute a part of the hinge device.

According to the embodiment, the cabinet 10 may have totally four storage spaces. A first upper storage chamber 30A and a second upper storage chamber 30B may be located at an upper portion in the cabinet 10, and a first lower storage chamber 40A and a second lower storage chamber 40B may be located in a lower portion therein. Each of the four storage spaces may be shielded by each door. In the embodiment, a door shielding the first upper storage chamber will be described as an example.

The second upper storage chamber 30B may have a dispenser device 50. A user can take out water or ices by using the dispenser device 50 without opening a door of the refrigerator. The dispenser device 50 may be removed.

FIG. 2 is a view showing a door 100 for a refrigerator according to an embodiment of the present disclosure. As shown in FIG. 2, the door 100 for a refrigerator is provided to open and close the first upper storage chamber 30A. In the embodiment, the door 100 for a refrigerator may be configured to be opened and closed while being rotated. Specifically, the door 100 for a refrigerator is brought into close contact with the front surface of the cabinet 10 to close the first upper storage chamber 30A, or moves away from the front frame while being rotated to open the first upper storage chamber 30A.

The refrigerator according to the embodiment of the present disclosure may achieve the sealed first upper storage chamber 30A by the door 100 for a refrigerator. The sealed first upper storage chamber 30A may store foods while maintaining a constant temperature without loss of cold air. In the embodiment, at least a part of the door 100 for a refrigerator is formed in a transparent see-through part 115. Therefore, the first upper storage chamber 30A may be seen from the outside through the see-through part 115.

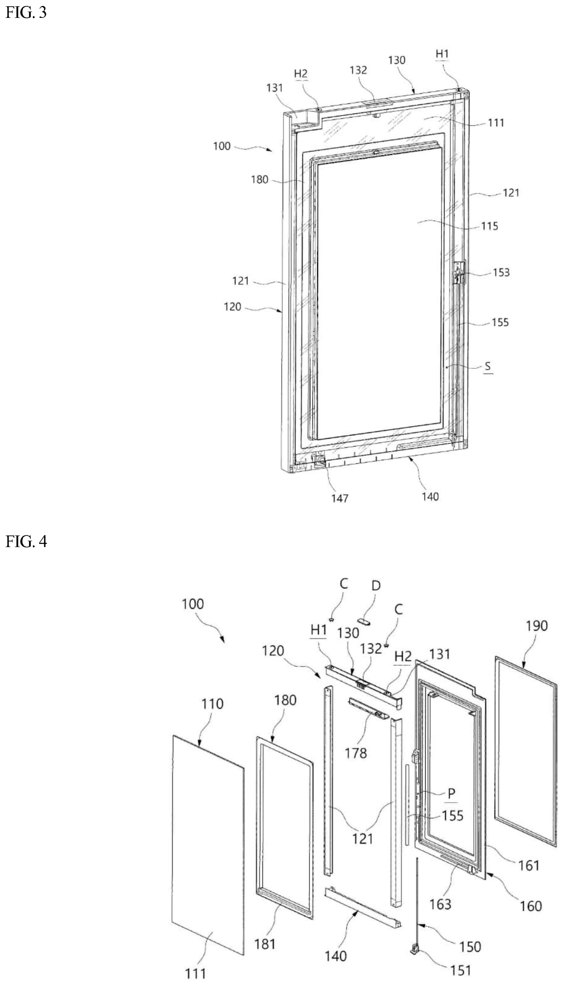

FIGS. 3 to 19 show a detailed structure of the door 100 for a refrigerator. In the embodiment, a hinge (not shown) may be mounted at one lateral portion of the door 100 for a refrigerator. The hinge connects the door 100 for a refrigerator to the cabinet 10 such that the door 100 is rotatable. The hinge may be assembled to a door frame, which will be described below. In the embodiment, referring to FIG. 2, the hinge is provided at a right surface of the door 100 for a refrigerator. Contrary to FIG. 2, the hinge may be provided at a left surface of the door 100, and may be provided at a middle height of the door 100, not at upper and lower portions of the door 100. Reference numeral 131 indicates a hinge mounting part to which the hinge is mounted.

As shown in FIG. 3, a rear portion of the door 100 for a refrigerator is shown without a door liner 160 and a gasket 190 that are assembled at the rear portion of the door 100 for a refrigerator. As shown in the drawing, when the door liner 160 is omitted, an empty-rectangular-shaped foaming space S may be opened at the rear portion of the door 100 for a refrigerator. The foaming space S may be shielded by the door liner 160 and foaming solution may be injected and foamed through an inlet H1, H2 while the foaming space S being shielded. The foaming space S may be provided in a clearance between the door frame and a rear panel 116 spaced apart from each other, the door frame and the rear panel 116 will be described below.

FIG. 4 is a perspective view showing disassembled parts constituting the door 100 for a refrigerator. As shown in FIG. 4, in a direction from the front to the rear of the door 100 for a refrigerator, a panel assembly 110, a heater housing 180, the door frame, the door liner 160, and the gasket 190 are arranged in order. Among the parts, the heater housing 180 may be arranged between the rear panel 116 of the panel assembly 110 and the door frame.

The panel assembly 110 may consist of multi-layered glass panels. More specifically, a plurality of transparent-material panels are laminated with spaces to provide the panel assembly 110, and the user can selectively see the inside of the refrigerator through the panel assembly 110. In the embodiment, the panel assembly 110 is configured such that the plurality of glass panels is arranged while being spaced apart from each other to provide an insulation layer. However, a material is not limited to the glass, and may be made of various materials through which it is possible to see the inside of the refrigerator.

Among the plurality of panel layers, a front panel 111 providing a front surface of the panel assembly 110 may be made of a half glass material to enable the inside of the refrigerator to be selectively seen, or the front panel 111 may be covered with a film to be translucent.

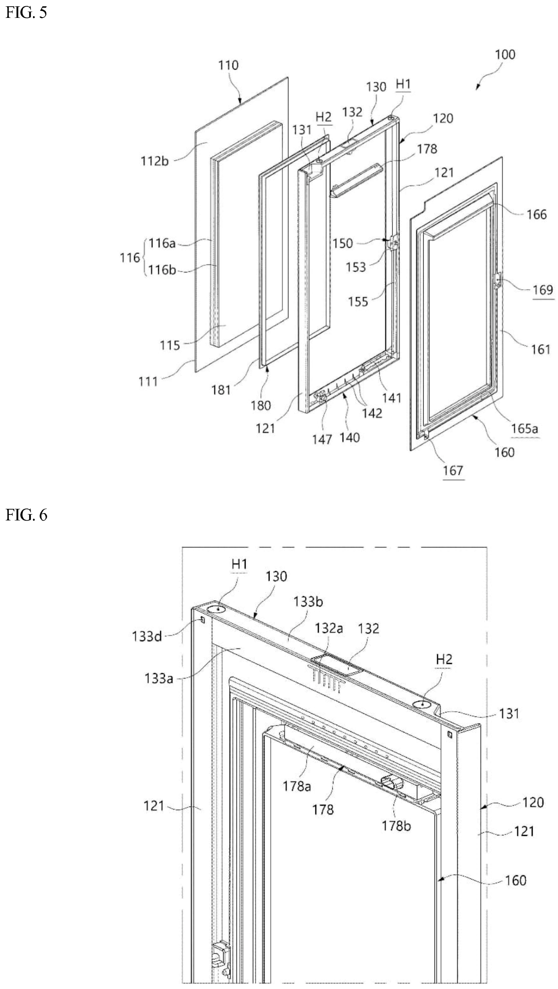

Referring to FIG. 5, the panel assembly 110 includes the front panel 111 providing the front surface of the panel assembly 110 and the rear panel 116 layered on a rear surface of the front panel 111. The rear panel 116 is layered on a rear portion of the front panel 111. In the embodiment, the rear panel 116 consists of two layers 116a and 116b, but may consist of one layer or less or of three layers or more. The panel assembly 110 may include the front panel 111 and the rear panel 116.

The panel assembly 110 is made of glass or a material that enables the inside of the refrigerator to be visible, so that the user can selectively see the inside of the refrigerator through the panel assembly. The front panel 111 and the rear panel 116 may have an insulation material or an insulation structure to prevent leakage of cold air in the refrigerator.

The rear panel 116 may have the size smaller than the size of the front panel 111. Specifically, the area of the front panel 111 may be larger than the area of the rear panel 116. Therefore, an edge of the front panel 111 may protrude more than an edge of the rear panel 116, i.e., than lateral surfaces of the rear panel 116.

The protruding portion of the front panel 111 may be referred to a bezel part 112b. A portion in the bezel part 112b may be referred to the see-through part 115. The see-through part 115 is a transparent portion as to allow the inside of the storage space to be seen through the panel assembly 110. However, the bezel part 112b is not necessarily transparent. In the embodiment, the bezel part 112b is provided only in the front panel 111. However, the see-through part 115 is provided not only in the front panel 111, and but also in the rear panel 116.

The see-through part 115 is a transparent portion allow the storage space in the refrigerator to be observed through the panel assembly 110, and may be referred to a center portion of the front panel 111 and the entire area of the rear panel 116. Referring to FIG. 3, the see-through part 115 is provided inside the bezel part 112b. The door frame, which will be described below, is provided on a rear surface of the bezel part 112b, and various parts are located therein. The above structure will be described again below.

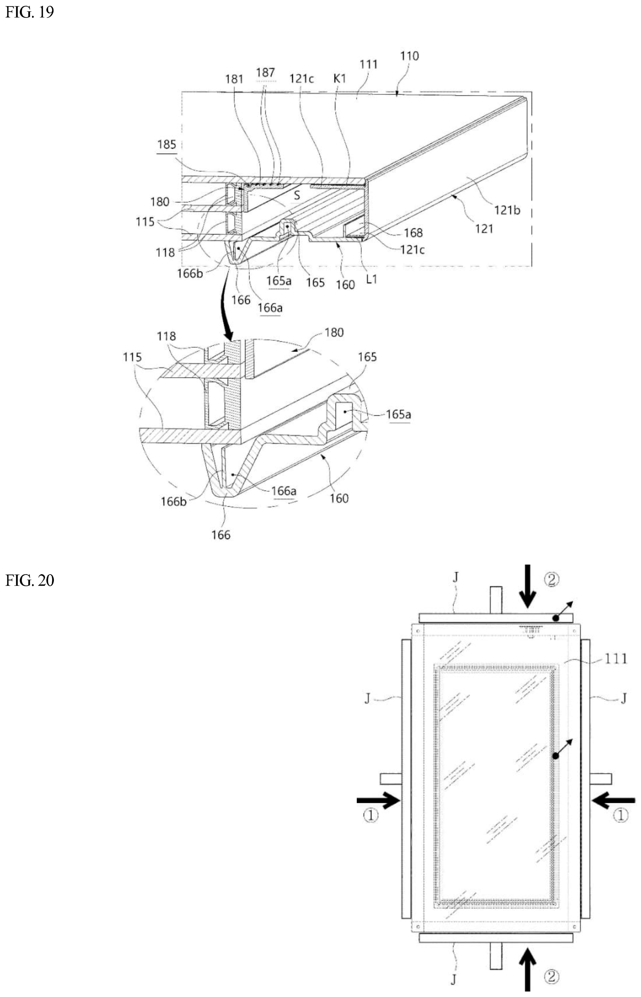

Referring to FIG. 19, a rod 118 may be inserted in a spacing between the glasses constituting the panel assembly 110. The rod 118 is provided to maintain a spacing between the glass panels. The glass panels and a plurality of rods 118 may be attached to each other by an adhesive. A sealant may be coated to maintain the airtightness of the space between the front panel 111 and the rear panel 116.

A low emissivity coating layer may be formed on a rear surface of the rear panel 116 in order to reduce heat transfer into the storage chamber by radiation. A glass on which the low emissivity coating layer is formed is referred to a Low-ε glass. The low emissivity coating layer may be formed by depositing a surface of a glass by sputtering or the like. The space between the front panel 111 and the rear panel 116 sealed by the rod 118 is formed in a vacuum state and thus is insulated.

If necessary, the sealed space between the front panel 111 and the rear panel 116 may be filled with inert gas such as argon gas for insulation. The inert gas is excellent in insulation property compared to normal air.

To describe the door frame, the door frame may be configured such that separate frames are assembled to each other. As the separate frames respectively constituting four sides of the door frame are assembled to be engaged to each other, the door frame is achieved. Among the separate frames, a plurality of inlets H1 and H2 connected to the foaming space S are provided in an upper frame 130 or a lower frame 140. The inlet H1, H2 may be open in a height direction of the door frame. According to the embodiment, the inlet H1, H2 may be formed in the upper frame 130.

In the embodiment, as will be described below, a side frame 120 and the upper frame 130 may be in surface-contact with each other at three surfaces and the side frame 120 and the lower frame 140 may also be in surface-contact with each other at three surfaces. Therefore, a shielding area for sealing the foaming space S may be enlarged.

The door frame may include a pair of side frames 120, the upper frame 130, and the lower frame 140. The side frames 120, the upper frame 130, and the lower frame 140 may be made of a synthetic resin material. The total weight of the door frame may be relatively lightened compared a metal door frame.

As shown in FIGS. 5 to 7, the side frame 120 may be arranged in a direction in which the side frame stands up on the door frame, that is, in a vertical direction. The side frame 120 may have a '⊂'-shape or U-shaped cross-section, and may lengthen in one direction. The above structure may improve the durability of the side frames 120 with respect to distortion or bending.

Specifically, a side body 121 constituting the side frame 120 may include a side front surface 121a, a side main portion 121b, and a side rear surface 121c. The side front surface 121a, the side main portion 121b, and the side rear surface 121c are perpendicularly connected to each other to form the '⊂' or U-shaped cross-section. An upper end and a lower end of the side body 121 may be open in the vertical direction.

The side front surface 121a may be in surface-contact with the bezel part 112b. The side front surface 121a may be formed in a continuous surface with a lower front surface 143a and an upper front surface 133a, which will be described below. The side front surface 121a, the lower front surface 143a, and the upper front surface 133a may be attached to the bezel part 112b by the adhesive to be fixed to each other. The side front surface 121a, the lower front surface 143a, and the upper front surface 133a may form a continuous surface together, whereby an attachment area may be secured sufficiently wide.

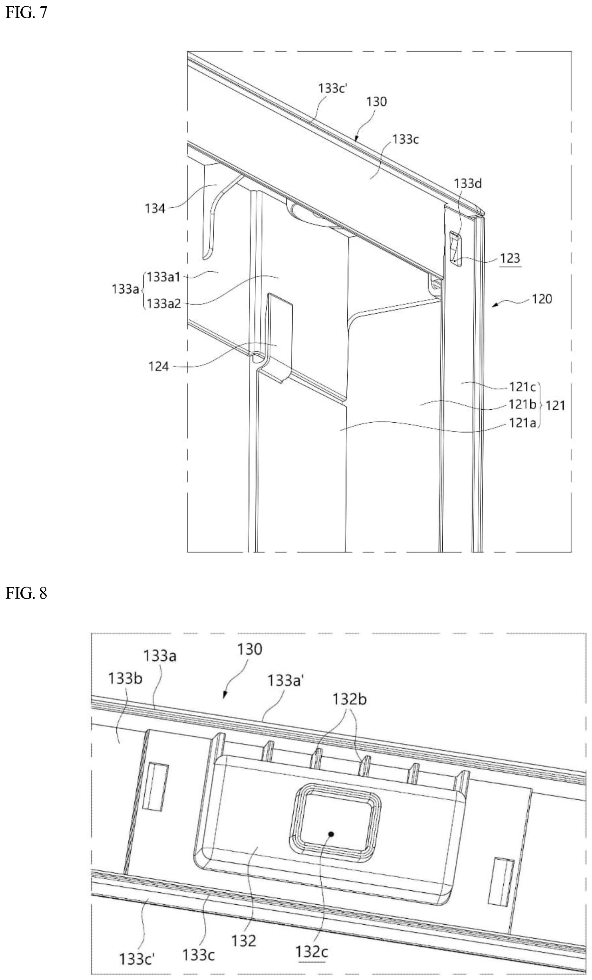

The side front surface 121a may have a hook arm 124. The hook arm 124 may hold a lower end of the upper frame 130. As shown in FIG. 7, the hook arm 124 may have a cantilever shape extended upward from a rear surface of the side front surface 121a. The hook arm 124 may hold the upper frame 130 while supporting the lower end of the upper frame 130.

The side main portion 121b may provide a lateral surface of the door frame. The side main portion 121b may be in surface-contact with the upper frame 130 and the lower frame 140. As shown in FIG. 7, an upper portion of the side main portion 121b overlaps with the upper frame 130.

The side rear surface 121c is perpendicular connected to the side main portion 121b and face the side front surface 121a. The side rear surface 121c may be narrower than the side front surface 121a. Since a contact area between the side front surface 121a and the panel assembly 110 should be sufficiently secured, the side front surface 121a is narrower than the side front surface 121a.

The side rear surface 121c may have a locking hole 123 into which a first locking hook 133d of the upper frame 130 is inserted. The locking hole 123 may be a portion formed by perforating the upper portion of the side rear surface 121c. When the first locking hook 133d is locked in the locking hole 123, the side frame 120 and the upper frame 130 may be assembled to each other. The hook arm 124 of the side front surface 121a and the locking hole 123 of the side rear surface 121c are assembled with the upper frame 130, so that the side frame 120 and the upper frame 130 may be prevented from being easily separated from each other and may be secured.

Upper portions of the pair of side frames 120 may be connected to each other by the upper frame 130. The upper frame 130 is formed in a bar shape connecting the pair of side frames 120 to each other, and the upper frame 130 may be arranged in a direction in which the upper frame 130 is placed on the door frame, i.e., in a transverse direction. The upper frame 130 may have a '⊂'-shaped or U-shaped cross section as the side frame 120, and may lengthen in one direction. The above structure may improve the durability of the upper frame 130 with respect to distortion or bending.

Specifically, the upper frame 130 may include the upper front surface 133a, an upper main part 133b, and an upper rear surface 133c. The upper front surface 133a, the upper main part 133b, and the upper rear surface 133c may be perpendicular connected to each other to form a '⊂'-shaped or U-shaped cross section. Left and right ends of the upper frame 130 may be open in left and right directions, respectively.

The upper front surface 133a may be in surface-contact with the side front surface 121a. Referring to FIG. 7, the upper front surface 133a overlaps with the side front surface 121a. The upper front surface 133a may include a first front surface 133a1 and a second front surface 133a2. The second front surface 133a2 may be formed in an assembly surface 133a2 stepped from the first front surface 133a1. The stepped assembly surface 133a2 may be a portion stepped rearward from the upper front surface 133a, and the rearward stepped portion may be filled with the side front surface 121a of the side frame 120. Therefore, the upper front surface 133a of the upper frame 130 and the side front surface 121a of the side frame 120 may form a continuous surface together.

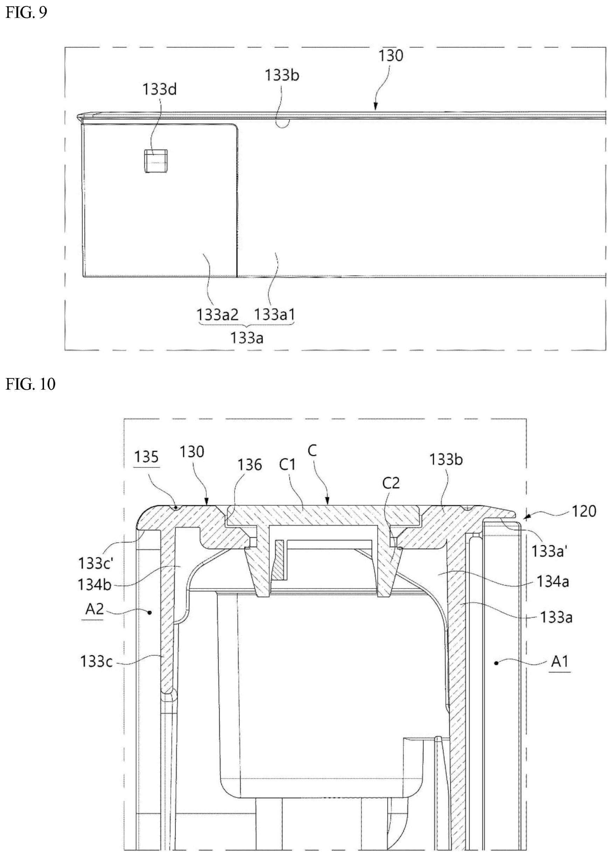

As shown in FIGS. 6 and 9, the first locking hook 133d may be projected on the upper front surface 133a. The first locking hook 133d may be inserted into the locking hole 123 of the side frame 120. The first locking hook 133d may be formed to be inclined downward in an assembly direction of the upper frame 130 and the side frame 120. Therefore, when the upper frame 130 is assembled to the side frame 120, the first locking hook 133d may be easily inserted into the locking hole 123. According to the embodiment, the first locking hook 133d may be projected on the stepped assembly surface 133a2.

The upper front surface 133a may be in surface-contact with the bezel part 112b. The upper front surface 133a and the rear surface of the bezel part 112b may be attached to each other by an adhesive and an adhesive tape. In order to achieve the above structure, the upper front surface 133a needs to have a sufficiently wide area.

The upper front surface 133a may be connected to the upper main part 133b. The upper main part 133b may be perpendicularly connected to the upper front surface 133a and provide an upper surface of the door frame. As shown in FIG. 5, the upper main part 133b may have a hole, the hole may be the inlet H1, H2. The inlet H1, H2 may include two inlets spaced apart from each other in the upper main part 133b. The inlet H1, H2 may be open in the height direction of the door frame, i.e., in a vertical direction.

According to the embodiment, any one of the pair of inlets H1 and H2 may be arranged to overlap with the side frame 120 and another inlet may be arranged at a location deviating from the side frames 120. The above structure is provided to correspond to a flow speed of foam solution injected through the pair of inlets H1 and H2. For example, since the foam solution passing through a locking device 150, which will be described below, is delayed in progress, the inlets H1 and H2 are arranged at the location wherein the side frame 120 and thus increase the flow speed of the foam solution.

As shown in FIG. 10, a shield cover C covers the inlets H1 and H2. The shield cover C may serve to shield the inlets H1 and H2 after the foam solution is all filled. A cover body C1 of a shield cover C may cover the inlets H1 and H2, and cover hooks C2 may be provided on a lower portion of the cover body C1. The cover body C1 may be seated on a stepped surface 136 formed in the upper main part 133b, and the cover hooks C2 may be held by lower surfaces of the inlets H1 and H2.

The upper main part 133b may have a contraction prevention groove 135. The contraction prevention groove 135 may be continuously depressed in a longitudinal direction of the upper main part 133b. The contraction prevention groove 135 is provided to prevent contraction and deformation in a manufacturing process of the upper frame 130 made by injection of synthetic resin material. The contraction prevention groove 135 may be formed on any one surface of the side frame 120, the upper frame 130, and the lower frame 140.

A predetermined space may be formed between the upper main part 133b and the upper front surface 133a. As shown in FIG. 10, a first front protruding end 133a', which is an end of the upper main part 133b, protrudes more than the upper front surface 133a, so that a first mounting space A1 may be located below the first front protruding end 133a' of the upper main part 133b. The first mounting space A1 may be filled with at least part of the front panel 111 of the panel assembly 110.

The upper main part 133b may be connected to the upper rear surface 133c. The upper rear surface 133c may be perpendicular connected to the upper main part 133b and may face the upper front surface 133a. As shown in FIG. 7, the upper rear surface 133c may be in surface-contact with the side rear surface 121c. The upper rear surface 133c may also have the first locking hook 133d.

According to the embodiment, the first locking hook 133d is provided on a front surface of the upper front surface 133a, and the hook arm 124 of the side frame 120 may be locked to a rear surface of the upper front surface 133a. Furthermore, the first locking hook 133d may be provided on a rear surface of the upper rear surface 133c, and the hook arm 124 of the side frame 120 may be hooked by a front surface of the upper rear surface 133c. Therefore, the upper frame 130 and the side frame 120 are engaged with each other at various portions thereof, so that firm fixation between the upper frame 130 and the side frame 120 may be achieved.

As shown in FIG. 10, a first rear surface protruding end 133c' may be provided on an upper end of the upper main part 133b. The first rear surface protruding end 133c' is a portion protruding more than the upper rear surface 133c, and an empty second mounting space A2 may be provided between the first rear surface protruding end 133c' and the upper rear surface 133c. The second mounting space A2 may be filled with the door liner 160.

As shown in FIG. 8, the upper frame 130 may have a sensor mounting part 132. The sensor mounting part 132 may be a portion to which a door sensor is installed. According to the embodiment, the sensor mounting part 132 may be provided in the upper main part 133b, and the sensor mounting part 132 may be depressed on the upper main part 133b. FIG. 8 is a perspective view showing a lower portion of the upper main part 133b, and referring to FIG. 8, the sensor mounting part 132 may be projected downward. A sensing hole 132c may be provided on a center portion of the sensor mounting part 132, and at least of part of the door sensor may be exposed outward.

Referring to FIG. 6, a sensing part 132a may be exposed from a front surface of the sensor mounting part 132. The sensing part 132a may be arranged in rear of the bezel part 112b of the panel assembly 110. According to the embodiment, the sensor mounting part 132 may be located on a center portion of an upper end of the door 100 for a refrigerator. As an example, D in FIG. 4 refers to a sensor cover covering the sensor mounting part 132.

Referring to FIG. 8, the sensor mounting part 132 may have transfer ribs 132b. The transfer ribs 132b may be a structure protruding from a lower surface of the upper main part 133b. According to the embodiment, the transfer ribs 132b may be provided such that a plurality of transfer ribs 132b is spaced apart from each other. The transfer ribs 132b may connect the upper front surface 133a on which the sensing part 132a is exposed to the sensor mounting part 132. The transfer ribs 132b may efficiently transfer an impact generated on a front surface of the door 100 for a refrigerator to the sensor mounting part 132.

As shown in FIGS. 7 and 9, surfaces in the upper front surface 133a, the upper main part 133b, and the upper rear surface 133c, the inner surfaces facing the foaming space S, may be connected to each other by a first reinforcement rib 134. A plurality of first reinforcement ribs 134 may be arranged on the upper frame 130 with intervals. The reinforcement rib may prevent twisting or bending of the upper frame 130. Particularly, in the foam process of the foam solution, the reinforcement rib may prevent the deformation of the upper frame 130. According to the embodiment, since the upper front surface 133a is wider than the upper rear surface 133c, the reinforcement rib may have an asymmetrical structure. Among the first reinforcement ribs 134, a portion 134a connected to the upper front surface 133a may be wider than a portion 134b connected to the upper rear surface 133c.

To describe the lower frame 140, lower portions of the pair of side frames 120 may be connected to each other by the lower frame 140. The lower frame 140 is formed in a kind of bar connecting the pair of side frames 120 to each other. The lower frame 140 may be arranged in a direction in which the lower frame 140 is placed on the door frame, i.e., in the transverse direction. The lower frame 140 may have a '⊂'-shaped or U-shaped cross section as the side frame 120, and may lengthen in one direction. The above structure may improve the durability of the lower frame 140 with respect to distortion or bending.

Specifically, the lower frame 140 may include the lower front surface 143a, the lower main part 143b, and a lower rear surface 143c. The lower front surface 143a, the lower main part 143b, and the lower rear surface 143c may be perpendicularly connected to each other to form a '⊂'-shape or U-shaped cross section. Left and right ends of the lower frame 140 may be open in left and right directions, respectively.

The lower front surface 143a may provide a front surface of the door frame together with the side front surface 121a and the upper front surface 133a. The lower front surface 143a may form a continuous surface together with the side front surface 121a and the upper front surface 133a, and the continuous surface may be in surface-contact with the bezel part 112b.

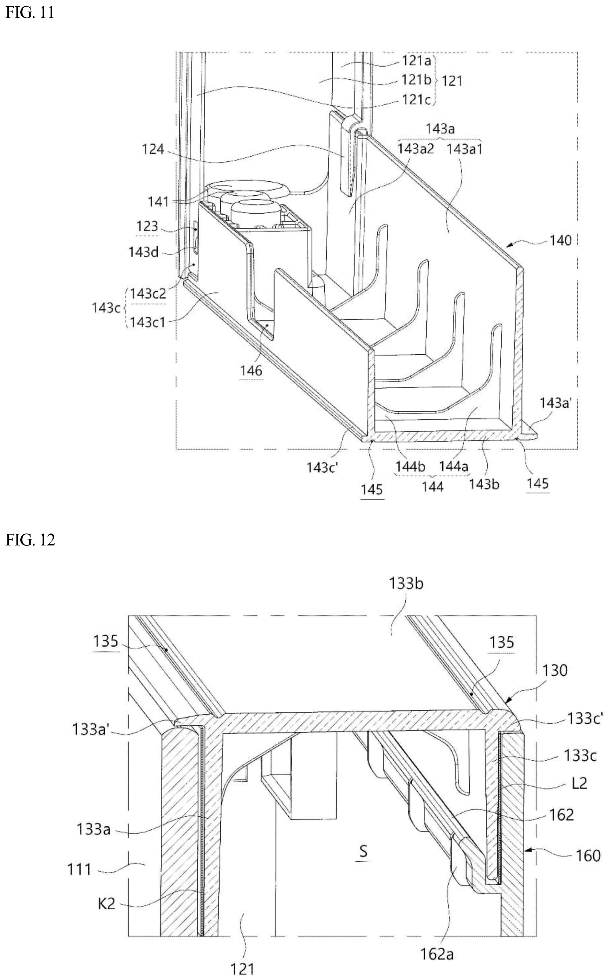

As shown in FIG. 11, the lower front surface 143a may be wider than the lower rear surface 143c. The hook arm 124 of the side frames 120 may be hooked by on an upper end of the lower front surface 143a. A second locking hook 143d may be projected on the lower front surface 143a, and the locking hole 123 of the side frame 120 may be fastened by second locking hook 143d. According to the embodiment, an assembly structure between the lower frame 140 and the side frame 120 may be the same as the assembly structure between the upper frame 130 and the side frames 120.

According to the embodiment, the second locking hook 143d is provided on a front surface of the lower front surface 143a, and the hook arm 124 of the side frame 120 may be hooked to a rear surface of the lower front surface 143a. Furthermore, the second locking hook 143d may be provided on a rear surface of the lower rear surface 143c, and the hook arm 124 of the side frame 120 may be hooked by a front surface of the lower rear surface 143c. Therefore, the upper frame 130 and the side frame 120 are engaged with each other at various portions thereof, so that firm fixation between the upper frame 130 and the side frame 120 may be achieved.

The lower front surface 143a may be in surface-contact with the side front surface 121a. The lower front surface 143a may include a first front surface 143al and a second front surface 143a2. The second front surface 143a2 may be formed in an assembly surface 143a2 stepped from the first front surface 143a1. The assembly surface 143a2 is a portion stepped rearward from the lower front surface 143a, and the rearward stepped portion may be filled with the side front surface 121a of the side frame 120. Therefore, the lower front surface 143a of the lower frame 140 and the side front surface 121a of the side frame 120 may form a continuous surface.

A predetermined space may be formed between the lower main part 133b and the upper front surface 133a. As shown in FIG. 11, a second front protruding end 143a', which is an end of a lower main part 143b, protrudes more than the lower front surface 143a, so that the first mounting space A1 may be located above the second front protruding end 143a' of the lower main part 143b. The first mounting space A1 may be the same as the first mounting space A1 provided between the upper main part 133b and the upper front surface 133a.

The lower front surface 143a may be connected to the lower main part 143b. The lower main part 143b may provide a bottom surface of the door frame. The lower main part 143b may have a hinge housing 141 to which a hinge device may be mounted. The hinge housing may be projected toward the inside of the foaming space S.

The lower main part 143b may be connected to the lower rear surface 143c. The lower rear surface 143c is perpendicularly connected to the lower main part 143b and may face the lower front surface 143a. The lower rear surface 143c may be in surface-contact with the side rear surface 121c.

The lower rear surface 143c may include a first rear surface 143c1and a second rear surface 143c2 as the lower front surface 143a. The second rear surface 143c2 and the first rear surface 143c1 may form a stepped assembly surface 143c2. The assembly surface 143c2 is a portion stepped rearward from the lower rear surface 143c, and the rearward stepped surface may be filled with the side rear surface 121c of the side frame 120. Therefore, the lower rear surface 143c of the lower frame 140 and the side rear surface 121c of the side frames 120 may form a continuous surface.

A second rear surface protruding end 143c' may be provided at a lower end of the lower rear surface 143c. The second rear surface protruding end 143c' may be a portion protruding from the lower rear surface 143c. The empty second mounting space A2 may be provided between the second rear surface protruding end 143c' and the lower rear surface 143c. The second mounting space A2 may communicate with the second mounting space A2 provided between the upper rear surface 133c and the upper main part 133b. The second mounting space A2 may be filled with the door liner 160.

Surfaces in the lower front surface 143a, the lower main part 143b, and the lower rear surface 143c, the inner surfaces facing the foaming space S, may be connected to each other by the second reinforcement rib 144. A plurality of second reinforcement rib 144 may be arranged on the lower frame 140 with intervals. The second reinforcement rib 144 may prevent twisting or bending of the lower frame 140. Particularly, in the foaming processing of the foam solution, it is possible to prevent deformation of the lower frame 140 by the second reinforcement rib 144. According to the embodiment, since the lower front surface 143a is wider than the lower rear surface 143c, the second reinforcement rib 144 may have an asymmetrical structure. Among the second reinforcement ribs 144, a portion 144a connected to the lower front surface 143a may be wider than a portion 144b connected to the lower rear surface 143c.

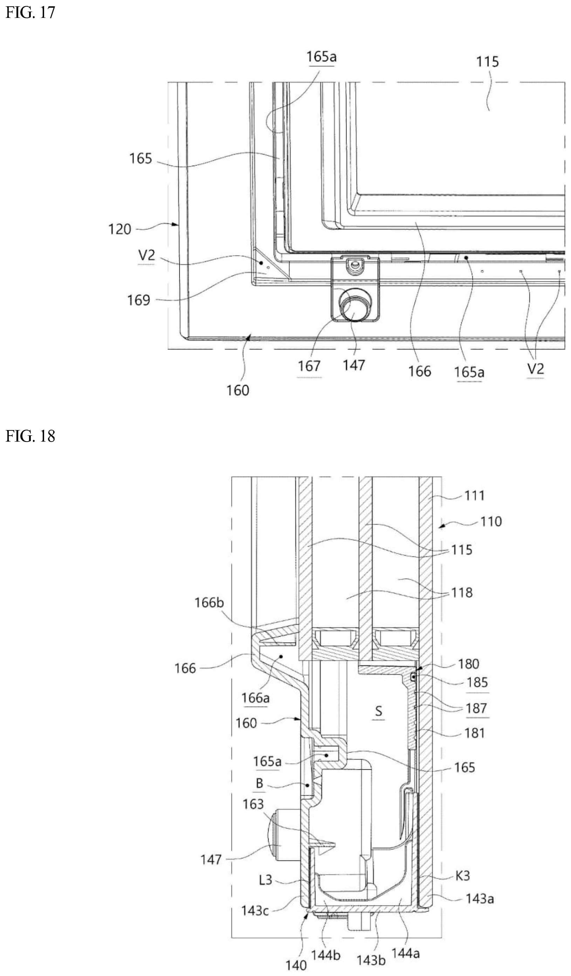

A push hole 146 may be formed in the lower rear surface 143c. The push hole 146 is a portion to which a push device 147 is mounted. A part of the push device 147 may be projected rearward through the push hole 146. FIG. 17 is a view showing a part of the push device 147. The push device 147 may provide an elastic force in a direction in which the door 100 for a refrigerator is pushed from the cabinet 10. When the user releases the locking device 150, the door 100 for a refrigerator may rotate forward to some degree.

The lower main part 143b may have a contraction prevention groove 145. The contraction prevention groove 145 may be continuously depressed in a longitudinal direction of the lower main part 143b. The contraction prevention groove 145 is provided to prevent contraction and deformation in a manufacturing process of the lower frame 140 made by injection of synthetic resin material.

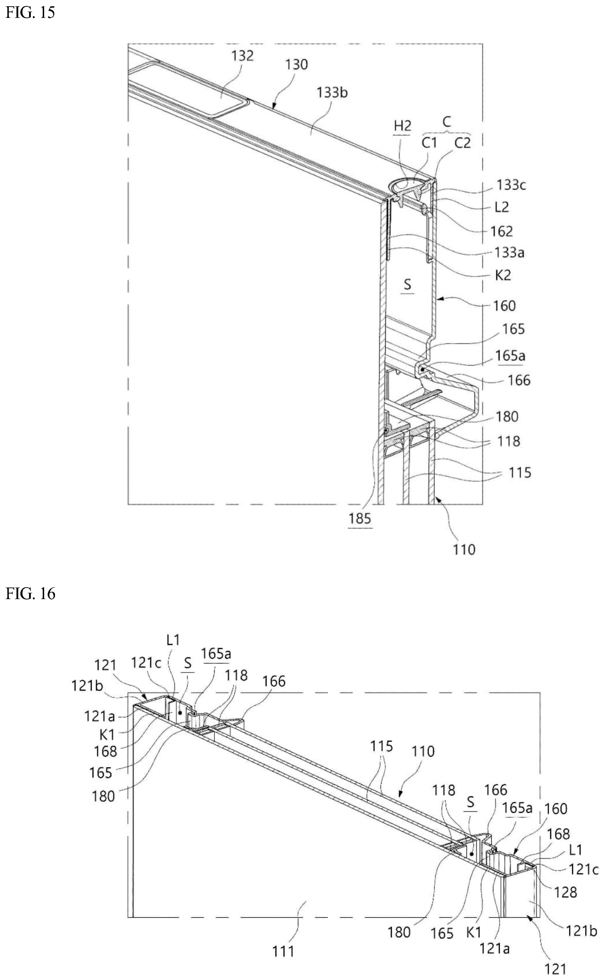

The front surface of the door frame assembled as described above may provide an attachment surface with respect to the rear surface of the front panel 111 of the panel assembly 110. Specifically, (i) the side front surface 121a of the side frame 120 may provide a first attachment surface K1 (referring to FIGS. 16 and 19) with respect to the rear surface of the front panel 111, (ii) the upper front surface 133a of the upper frame 130 may provide a second attachment surface K2 (referring to FIGS. 12 and 15) with respect to the rear surface of the front panel 111, and (iii) the lower front surface 143a of the lower frame 140 may provide a third attachment surface K3 (referring to FIG. 18) with respect to the rear surface of the front panel 111. The first to third attachment surfaces K1 to K3 are formed in a continuous surface. Therefore, a sufficiently wide attachment area may be secured between the front surface of the door frame and the rear surface of the front panel 111.

The door frame may have the locking device 150. The locking device 150 may be provided to prevent arbitrary opening of the door 100 for a refrigerator. The locking device 150 may be arranged in a vertical direction along the side frame 120. Referring to FIGS. 4 and 5, the locking device 150 may include a handle 151 at a lower end thereof. The locking device 150 with a long bar shape may extend upward from the handle 151. The locking device 150 may be covered by a locking housing 155. Therefore, the locking device 150 may be protected in the foaming process.

A locking part 153 may be provided at a surface opposite to the handle 151. The locking part 153 may be a kind of hook structure. When the user raises the handle 151, the locking part 153 is operated in conjunction with the handle, and a locking state may be released. An elastic member (not shown) provided in the locking device 150 may recover the handle 151 to the initial location of the handle 151.

The door frame may be coupled to the door liner 160. The door liner 160 may be assembled to the door frame to shield the foaming space S. Specifically, the foaming space S may refer to an empty space defined by the rear surface of the bezel part 112b, an inside surface of the door frame, a lateral surface of the rear panel 116, and a front surface of the door liner 160.

When the door liner 160 is assembled to the door frame to shield the foaming space S and the foam solution is injected through the inlets H1 and H2, the foam solution is filled and foamed in the foaming space S to form the insulator.

As shown in FIG. 5, a liner body 161 of the door liner 160 has a rectangular frame shape, and a center portion of the liner body 161 may be void. As the door liner 160 has a frame shape, the storage space in the cabinet 10 may be exposed to the outside while been seen through the see-through part 115 and the door liner 160.

The door liner 160 may be assembled to the door frame. As shown in FIG. 12, the door liner 160 may have a locking arm 162 projected thereon. The locking arm 162 may be extended on the front surface of the door liner 160 while having a cantilever shape. The locking arm 162 may be extended to be inclined toward the upper side, i.e., toward the upper frame 130. The locking arm 162 may be locked by a lower end of the upper rear surface 133c of the upper frame 130. The locking arm 162 may have a plurality of locking pieces 162a to increase the elastic force of the locking arm 162.

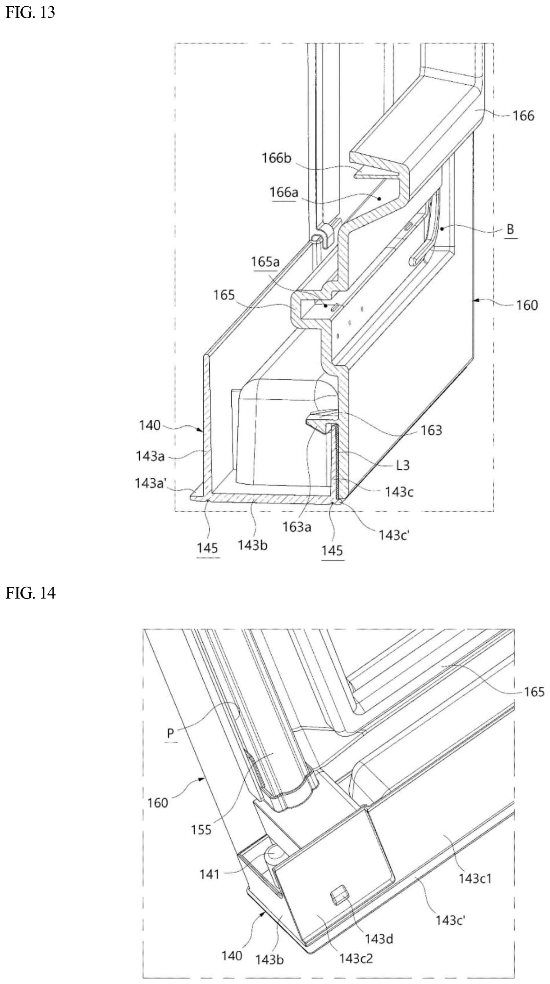

As shown in FIG.13, the door liner 160 may have a locking hook 163 at a lower portion thereof. The locking hook 163 may be projected from the front surface of the door liner 160 while having a cantilever shape. The locking hook 163 may be assembled while passing through the lower rear surface 143c of the lower frame 140. A locking step 163a may be provided at an end of the locking hook 163to maintain a locking state of the locking hook 163.

As described above, an upper portion of the door liner 160 may be locked to the upper frame 130 by the locking arm 162. A lower portion of the door liner 160 may be locked to the lower frame 140 by the locking hook 163. The worker firstly locks the locking arm 162 to the upper frame 130 and then rotates the lower end of the door liner 160 to lock the locking hook 163 to the lower frame 140. Accordingly, the door liner 160 and the door frame may be simply assembled to each other.

When the door liner 160 is assembled to the door frame, the door liner 160 may be in surface-contact with the side frame 120, the upper frame 130, and the lower frame 140 constituting the door frame. As shown in FIG. 16, the door liner 160 is in surface-contact with the side rear surface 121c of the side frames 120 to form a first liner contact surface L1. As shown in FIGS. 12 and 15, the door liner 160 is in surface-contact with the upper rear surface 133c of the upper frame 130 to form a second liner contact surface L2. As shown in FIG. 13, the door liner 160 is in surface-contact with the lower rear surface 143c of the lower frame 140 to form a third liner contact surface L3. As described above, the door liner 160 is in surface-contact with the side frames 120, the upper frame 130, and the lower frame 140 constituting the door frame, whereby a shielding area for sealing the foaming space S may be wider.

As shown in FIG.13, the door liner 160 may have the gasket mounting part B. The gasket mounting part B may be formed such that a part of the door liner 160 is recessed, and the gasket 190 may be assembled to the gasket mounting part B. A shape of the gasket mounting part B may be variously changed in response to a shape of the gasket 190.

The gasket mounting part B of the door liner 160 may include a protrusion 165 and the protrusion 165 may include a gasket assembly groove 165a. The gasket assembly groove 165a may be recessed from the rear surface of the door liner 160 deeper than the gasket mounting part B. A part of the gasket 190 may be inserted into the gasket assembly groove 165a. When necessary, a fastening device is assembled to the gasket assembly groove 165a, so that the gasket 190 may be securely fixed to the door liner 160 by a beam.

As shown in FIG. 17, the gasket assembly groove 165a may have a plurality of air vents V2 connected to the foaming space S. The air vents V2 may be provided to discharge air in the foaming space S to the outside. The plurality of air vents V2 may be formed along the gasket assembly groove 165a. Since the inlets H1 and H2 may include the pair of inlets H1 and H2, the foam solution injected through the pair of inlets H1 and H2 expands and solidifies to cause a gas trap, and the air vents V2 may release the gas trap.

A push passing part 167 to which the push device 147 is mounted may be provided at the lower portion of the door liner 160. A part of the push device 147 is projected rearward through the push passing part 167, so that the push device 147 may be brought into close contact with the front surface of the cabinet 10.

The door liner 160 may have an interference prevention part 169. The interference prevention part 169 is a recessed space provided to prevent interference with the gasket 190 in a process in which the gasket 190 is depressed. According to the embodiment, the interference prevention part 169 may be formed at an edge portion of the gasket mounting part B adjacent to the protrusion. The interference prevention part 169 may have air vents V2.

As described above, the door liner 160 may include the first liner contact surface L1, the second liner contact surface L2, and the third liner contact surface L3 between the door liner 160 and the door frame. The door liner 160 may be in contact with the rear surface of the rear panel 116 to form a boundary of the foaming space S. A part outside the door liner 160 may be in close contact with a rear surface edge of the door frame, and a part inside the door liner 160 may be in closed contact with the rear surface of the rear panel 116.

As shown in FIGS. 13, 18, and 19, a foam boundary portion 166 may be provided inside the door liner 160. The foam boundary portion 166 may be projected toward the rear of the door liner 160, i.e., in a direction away from the rear panel 116. According to the embodiment, the foam boundary portion 166 may have a triangular cross section. A damping space 166a may be provided inside the triangular space.

A one end of the foam boundary portion 166 may be may be in close contact with a surface of the rear panel 116. A portion where the foam boundary portion 166 and the rear panel 116 meet together may be provided as one boundary of the foaming space S. The damping space 166a may prevent excessive pressure on the foam boundary portion 166 by slowing a filling speed of the foam solution.

The damping space 166a may have a damping plate 166b projected toward a surface of the rear panel 116. The damping plate 166b may have a plate structure extended along the damping space 166a. The damping space 166a may be divided into left and right spaces with the damping plate 166b as the center. However, one end of the damping plate 166b and the surface of the rear panel 116 may not be in close contact with each other, and may be spaced apart from each other at a predetermined interval, as shown in the enlarged view of FIG. 19. Therefore, the foam solution may be filled into the boundary over the damping plate 166b. The damping plate 166b may slow the filling speed of the foam solution into the damping space 166a down.

As shown in FIG. 19, an edge of the door liner 160 may be in surface-contact with the side rear surface 121c of the side frames 120. The first liner contact surface L1 described above may be provided on the contact portion. A division fence 168 may be projected on an inner portion of the door liner 160 adjacent to the side rear surface 121c toward the side front surface 121a of the side frame 120. The division fence 168 may slow a speed of the foam solution flowing toward the first liner contact surface L1 so as to prevent the foam solution from leaking to the outside. The division fence 168 may be extend in the same direction as the damping plate 166b.

As shown in FIGS. 4 to 6, the door frame and the rear panel 116 are spaced apart from each other, and a lighting device 178 may be installed in a part of the foaming space S. The lighting device 178 may be provide to light the see-through part 115 and be arranged in the transverse direction. The lighting device 178 may include a lighting part 178a such as a LED for emitting light, and a connector part 178b applying power and transmitting a signal. The lighting device 178 may be omitted or may be replaced with an input device for signal inputting.

The bezel part 112b may be coupled to the heater housing 180. The heater housing 180 is provided to install the heating device (not shown) such as a heater wire. According to the embodiment, heater housing 180 may be provided at a boundary portion between the front panel 111 of the heater housing 180 and the rear panel 116. The heating device may prevent condensation generated on the door 100 for a refrigerator. A housing body 181 constituting the heater housing 180 may have a rectangular frame shape.

As shown in FIGS. 18 and 19, the housing body 181 constituting the heater housing 180 may have a heater mounting groove 185 formed toward a rear surface of the bezel part 112b. The heating device may be mounted in the heater mounting groove 185. The heater mounting groove 185 may be provided at a location adjacent to the rear panel 116.

The heater housing 180 may have attachment grooves 187 at a location adjacent to the heater mounting groove 185. The attachment grooves 187 may be open toward the bezel part 112b. The attachment grooves 187 may be provided to firmly attach the adhesive or adhesive tape, which holds the heater housing 180 to the bezel part 112b, to the heater housing 180. According to the embodiment, the attachment grooves 187 may include a plurality of attachment grooves 187 to form a continuously uneven structure.

Hereinbelow, a process of manufacturing the door according to the present disclosure will be described. The front panel 111 and the rear panel 116 that constitute the panel assembly 110 may be layered together to constitute the single panel assembly 110. Separately, the door frame may be assembled. The door frame may include the pair of side frames 120, the upper frame 130, and the lower frame 140. The upper frames 130 may be assembled in a downward direction and the lower frame 140 may be assembled in an upward direction. According to the embodiment, the assembly structure between the side frames 120 and the upper frame 130 and the assembly structure between the side frames 120 and the lower frame 140 may be the same.

According to the embodiment, the first locking hook 133d may be provided at the front surface of the upper front surface 133a. The hook arm 124 of the side frame 120 may be locked to the rear surface of the upper front surface 133a. Furthermore, the first locking hook 133d may be provided on a rear surface of the upper rear surface 133c, and the hook arm 124 of the side frame 120 may be hooked by a front surface of the upper rear surface 133c. Therefore, the upper frame 130 and the side frame 120 are engaged with each other at various portions thereof, so that firm fixation between the upper frame 130 and the side frame 120 may be achieved.

When the door frame is assembled, the door frame and the panel assembly 110 may be coupled to each other. The panel assembly 110 may be laid down with the front panel 111 facing upward, and the door frame may be arranged to surround the rear panel 116. As shown in FIG. 20, jigs J may be provided at four surfaces of the door frame to push the door frame in directions of edges thereof. Arrows ① and (2) indicates the directions in which the jigs J push the door frame.

Then, when the front panel 111 is pressed in a downward direction by using a roller, etc., the rear surface of the bezel part 112b and the front surface of the door frame may be brought into contact with each other. As described above, (i) the side front surface 121a of the side frame 120 may provide the first attachment surface K1 (referring to FIGS. 16 and 19) with respect to the rear surface of the front panel 111, (ii) the upper front surface 133a of the upper frame 130 may provide the second attachment surface K2 (referring to FIGS. 12 and 15) with respect to the rear surface of the front panel 111, and (iii) the lower front surface 143a of the lower frame 140 may provide the third attachment surface K3 (referring to FIG. 18) with respect to the rear surface of the front panel 111. The first to third attachment surfaces K1 to K3 may be formed in a continuous surface. Therefore, it is possible to secure sufficiently firm attachment between the front surface of the door frame and the rear surface of the front panel 111.

The assembly consisting of the panel assembly 110 and the door frame may be turned over, and the heater housing 180 may be attached to the bezel part 112b. The door liner 160 may be assembled in rear of the door frame. The upper portion of the door liner 160 may be locked to the upper frame 130 by the locking arm 162. The lower portion of the door liner 160 may be locked to the lower frame 140 by the locking hook 163. The worker firstly locks the locking arm 162 to the upper frame 130 and then rotates the lower end of the door liner 160 to lock the locking hook 163 to the lower frame 140.

Then, the door liner 160 may be in surface-contact with the side frame 120, the upper frame 130, and the lower frame 140 constituting the door frame. The door liner 160 may be in surface-contact with the side rear surface 121c of the side frame 120 to provide the first liner contact surface L1, the door liner 160 is in surface-contact with the upper rear surface 133c of the upper frame 130 to provide the second liner contact surface L2, and the door liner 160 is in surface-contact with the lower rear surface 143c of the lower frame 140 to provide the third liner contact surface L3. As described above, the door liner 160 is in surface-contact with the side frames 120, the upper frame 130, and the lower frame 140 constituting the door frame, whereby a shielding area for sealing the foaming space S may be wider.

The foam solution may be filled through the inlets H1 and H2 and foamed to form the insulator. The foam solution may be filled into the foaming space without leakage to the outside by the structure of the surface-contact between the bezel part 112b and of the front surface of the door frame and the surface-contact between the rear surface of the door frame and the door liner 160.

Hereinabove, although all components constituting the embodiment according to the present disclosure are described as being coupled to each other or operated in combination as one, the present disclosure is not limited to the embodiment. Within the scope of the purpose of the present disclosure, all of the components may be operated by selectively coupling one or more components together. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof. Unless otherwise defined, all terms including technical and scientific terms used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.
The following aspects are preferred embodiment of the invention.
1. A refrigerator comprising:
   a cabinet (10) comprising a storage chamber; and
   a door (100) configured to open and close the storage chamber,
   wherein the door (100) comprises:
      a panel assembly (110) configured such that a front panel (111) and a rear panel (116) are connected to each other, the front panel (111) providing a front surface of the door (100), and the rear panel (116) being arranged to be spaced apart from the front panel (111) and providing a rear surface of the door (100);
      an upper frame (130) providing an upper surface of the door (100), and coupled to a rear surface of the front panel (111);
      a lower frame (140) providing a lower surface of the door (100) and coupled to the rear surface of the front panel (111);
      side frames (120) providing opposite lateral surfaces of the door (100) and coupled to the rear surface of the front panel (111);
      a door liner (160) being in contact with all of the upper frame (130), the lower frame (140), the side frames (120), and the rear panel (116); and
      an insulator filled in a foaming space (S) defined by the panel assembly (110), the upper frame (130), the lower frame (140), and the side frames (120), and
      the door (100) further comprises: a rod (118) connecting the front panel (111) to the rear panel (116), a heater housing (180) attached to the rear surface of the front panel (111) while covering the rod (118), and a heating device coupled to the heater housing (180) and being in contact with the rear surface of the front panel (111).
2. The refrigerator of aspect 1, wherein the heater housing (180) comprises a heater mounting groove (185) being open toward the rear surface of the front panel (111) and the heating device is mounted in the heater mounting groove (185).
3. The refrigerator of aspect 2, wherein the heater housing (180) comprises an attachment groove (187) recessed on a location adjacent to the heater mounting groove (185), and the attachment groove (187) comprises a plurality of attachment grooves (187), which are arranged in parallel along the heater housing (180).
4. The refrigerator of any one of aspects 1 to 3, wherein the heater housing (180) has a L-shaped cross-section, and a part of the heater housing (180) covers a lateral surface of the rear panel (116) including the rod (118).
5. The refrigerator of any one of aspects 1 to 4, wherein the door liner (160) comprises:
   a center portion penetrated in a thickness direction thereof to expose the rear panel (116) rearward;
   a foam boundary portion (166) projected to cover periphery of the center portion; and
   a damping plate (166b) arranged between the foam boundary portion (166) and the rear panel (116).
6. The refrigerator of any one of aspects 1 to 5,
   wherein the upper frame (130) comprises an upper front surface (133a), an upper main part (133b), and an upper rear surface (133c),
   wherein the lower frame (140) comprises a lower front surface (143a), a lower main part (143b), and a lower rear surface (143c),
   wherein the side frames (120) comprise a side front surface (121a), a side main portion (121b), and a side rear surface (121c),
   wherein the door liner (160) is configured to be in contact with all of the upper rear surface (133c), the lower rear surface (143c), the side rear surface (121c), and the rear panel (116); and,
   wherein the side front surfaces (121a) of the side frames (120) are configured to be in surface-contact with stepped assembly surfaces (133a2, 143c2) formed in at least one of the upper front surface (133a) of the upper frame (130) and the lower front surface (143a) of the lower frame (140), thus the upper front surface (133a) or the lower front surface (143a) forming a surface parallel to the side front surfaces (121a) of the side frames (120).
7. The refrigerator of aspect 6, wherein the upper frame (130) and the lower frame (140) respectively have stepped assembly surfaces (133a2, 143c2) on surfaces thereof, and when the side frames (120) are coupled to the stepped assembly surfaces (133a2, 143c2), surfaces of the side frames (120), the upper frame (130), and the lower frame (140) form a continuous surface.
8. The refrigerator of aspect 6 or 7, wherein the side frames (120) and the upper frame (130) respectively have a locking hole (123) and a first locking hook (133d), so that the side frames (120) and the upper frame (130) are configured to be assembled to each other while being engaged with each other.
9. The refrigerator of any one of aspects 6 to 8, wherein each of the side frames (120), the upper frame (130), and the lower frame (140) has a U-shaped cross-section, and the side frames (120) and the upper frame (130) are perpendicularly assembled to each other and are in surface-contact with each other at three surfaces, and the side frames (120) and the lower frame (140) are perpendicularly assembled to each other and are in surface-contact with each other at three surfaces.
10. The refrigerator of any one of aspects 6 to 9, wherein the upper front surface (133a) and the upper rear surface (133c) of the upper frame (130) respectively have first locking hooks (133d), and the first locking hooks (133d) are formed to be inclined downward along an assembly direction between the upper frame (130) and the side frames (120).
11. The refrigerator of any one of aspects 6 to 10, wherein the upper frame (130) comprises a sensor mounting part (132) to which a door sensor is mounted, and transfer ribs (132b) are connected to a portion between the sensor mounting part (132) and the upper front surface (133a).
12. The refrigerator of any one of aspects 6 to 11, wherein in the upper front surface (133a), the upper main part (133b), and the upper rear surface (133c) of the upper frame (130), inner surfaces facing the foaming space (S) are connected to each other by a reinforcement rib (144).
13. The refrigerator of any one of aspects 6 to 12, wherein inlets (H1,H2) through which the insulator is filled are shielded by a shield cover (C), and a cover body (C1) of the shield cover (C) is placed on a stepped surface formed on the upper main part (133b) of the upper frame (130), and cover hooks (C2) are provided on a lower portion of the cover body (C1) and locked to lower surfaces of the inlets (H1,H2).
14. The refrigerator of any one of aspects 6 to 13, wherein the side front surface (121a) of the side frame (120) and a rear surface of the front panel (111) form a first attachment surface (K1), the upper front surface (133a) of the upper frame (130) and the rear surface of the front panel (111) form a second attachment surface (K2), and the lower front surface (143a) of the lower frame (140) and the rear surface of the front panel (111) form a third attachment surface (K3), and the first attachment surface (K1), the second attachment surface (K2), and the third attachment surface (K3) form a continuous surface together.
15. The refrigerator of any one of aspects 9 to 14, wherein a contraction prevention groove (135) is continuously formed on a surface of at least one of the side frames (120), the upper frame (130), and the lower frame (140) in a longitudinal direction.

## Claims

1. A refrigerator comprising:
a cabinet (10) comprising a storage chamber; and
a door (100) configured to open and close the storage chamber,
wherein the door (100) comprises:
a panel assembly (110) including a front panel (111) made of glass and configured to provide a front surface of the door (100), a rear panel (116) made of glass and spaced apart from the front panel (111) and configured to define a rear surface of the door (100), and a rod (118) disposed between the front panel (111) and the rear panel (116) and configured to provide a sealed space;
side frames (120) coupled to the rear surface of the front panel (111) and configured to define side surfaces of the door (100);
an upper frame (130) coupled to the rear surface of the front panel (111) and to the side frames (120) and configured to define an upper surface of the door (100);
a lower frame (140) coupled to the rear surface of the front panel (111) and to the side frames (120) and configured to define a lower surface of the door (100);
a door liner (160) having a rectangular frame shape, the door liner being coupled to the upper frame (130), the lower frame (140), the side frames (120), and the rear panel (116); and
an insulator filled in a foaming space (S) defined by the panel assembly (110), the upper frame (130), the lower frame (140), and the side frames (120);
wherein the door liner (160) comprises:
a center portion penetrated in a thickness direction to expose the rear panel (116) rearward;
a foam boundary portion (166) projected to cover the periphery of the center portion; and
a damping plate (166b) arranged between the foam boundary portion (166) and the rear panel (116).

2. The refrigerator of claim 1, wherein an outer portion of the door liner (160) is in close contact with edges of a rear surface of a door frame comprising the upper, lower, and side frames (120), and a first end of the foam boundary portion (166) is coupled to a rear surface of the rear panel (116).

3. The refrigerator of claim 1 or 2, wherein the foam boundary portion (166) is in close contact with a rear surface of the rear panel (116), and a boundary of the foaming space (S) is formed on a portion in which the foam boundary portion (166) and the rear surface of the rear panel (116) are in close contact with each other.

4. The refrigerator of any one of claims 1 to 3, wherein the foam boundary portion (166) is recessed to provide a damping space (166a) therein.

5. The refrigerator of claim 4, wherein the damping plate (166b) projects from the damping space (166a) toward a surface of the rear panel (116) so that the damping space (166a) is divided by the damping plate (166b).

6. The refrigerator of any one of claims 1 to 5, wherein an edge of the door liner (160) is in surface-contact with a rear surface of a door frame comprising the upper, lower, and side frames (120), and a division fence (168) projects toward the foaming space (S) from a surface of the door liner (160) close to a rear surface edge of the door frame.

7. The refrigerator of any one of claims 1 to 6, wherein a locking arm (162) projects from an upper portion of the door liner (160) to lock a lower end of an upper rear surface portion (133c) of the upper frame (130), and a locking hook (163) is provided on a lower portion of the door liner (160), the locking hook (163) engaging with and passing through a lower rear surface portion (143c) of the lower frame (140).

8. The refrigerator of any one of claims 1 to 7, wherein the foam boundary portion (166) has a triangular cross section.

9. The refrigerator of claim 8, wherein a damping space (166a) is provided inside the triangular cross section of the foam boundary portion (166).

10. The refrigerator of claim 9, wherein the damping space (166a) is partitioned into left and right spaces by the damping plate (166b), and one end of the damping plate (166b) is spaced from a surface of the rear panel (116) by a predetermined interval to define a passage over the damping plate (166b) communicating toward the boundary.

11. The refrigerator of claim 9 or 10, wherein the damping plate (166b) has a plate structure extended along the damping space (166a).

12. The refrigerator of claim 11, wherein one end of the damping plate (166b) is spaced apart from the surface of the rear panel (116) at a predetermined interval, allowing the foam solution to be filled over the damping plate (166b).

13. The refrigerator of claim 12, wherein the damping plate (166b) is a plate-shaped member disposed at a center of a triangular cross section of the damping space (166a) to partition the damping space (166a) into left and right spaces.

14. The refrigerator of any one of claims 6 to 13, wherein the division fence (168) extends in the same direction as the damping plate (166b) and is configured to slow a speed of the foam solution flowing toward a contact surface (L1) between the door liner (160) and the side frames (120) to prevent leakage.

15. The refrigerator of any one of claims 1 to 14, further comprising a plurality of air vents (V2) formed in a gasket assembly groove (165a) of the door liner (160), the air vents (V2) being connected to the foaming space (S) to release gas trap during foaming.
